# DEMANDE DE BREVET EUROPEEN

(11) **EP 0 659 997 A1**
(43) Date de publication de la demande: **28.06.1995**
(21) Numéro de dépôt: 94402932.1
(22) Date de dépôt: 19.12.1994
(51) Int. Cl.: F02M 37/22, B01D 35/14

(54) **Perfectionnements aux boîtiers de filtres à liquide pour moteurs**

(30) Priorité: 22.12.1993 FR 9315463
(71) Demandeur: FILTRAUTO, F-78180 Montigny le Bretonneux (FR)
(72) Inventeur: Simon, Olivier, F-75015 Paris (FR); Perrein, René, F-93300 Aubervilliers (FR); Muzica Vincent, F-78340 Les Clayes sous Bois (FR)
(74) Mandataire: Burbaud, Eric

(57) **Abrégé**

L'invention concerne un boîtier de filtre à liquide pour moteur, comportant une cuve (1) qui est adaptée à recevoir un élément filtrant (2) et qui présente une ouverture (3) permettant de remplacer ledit élément filtrant, le boîtier comportant en outre un couvercle (4) amovible pour fermer ladite ouverture, en serrant axialement un joint annulaire (7) contre la cuve.

Selon l'invention, le boîtier comporte en outre une bague de serrage (9) rotative, qui coopère avec la cuve et le couvercle pour solliciter le couvercle vers la cuve par effet de vissage, ce boîtier comportant aussi un organe de rétention (10) et une denture (11) qui s'étend angulairement, cet organe de rétention et cette denture étant solidaires l'un de la bague, l'autre de la cuve ou du couvercle, l'organe de rétention étant sollicité élastiquement vers la denture et étant adapté à s'engager dans ladite denture, pour retenir ladite bague tant qu'elle n'est pas soumise à un couple de rotation exercé volontairement.

## Description

La présente invention concerne un boîtier de filtre à liquide pour moteur à combustion interne, notamment un boîtier de filtre à gazole, comportant une cuve qui est adaptée à recevoir un élément filtrant et qui présente une ouverture permettant de remplacer ledit élément filtrant, le boîtier comportant en outre un couvercle amovible adapté à fermer ladite ouverture, le couvercle et la cuve présentant respectivement deux portées annulaires qui sont disposées en regard l'une de l'autre lorsque le couvercle ferme l'ouverture de la cuve et qui sont adaptées à pincer axialement entre elles un joint annulaire pour réaliser une fermeture étanche de l'ouverture de la cuve, le couvercle comportant un conduit qui le traverse, la cuve étant destinée à être montée dans une position fixe.

Dans ce type de boîtier, la fixation du couvercle sur la cuve doit se faire sans rotation sensible du couvercle, puisque celui-ci comporte un conduit qui le traverse, qui communique avec l'élément filtrant, et qui est en général relié au moteur par un tuyau flexible.

Dans des boîtiers connus du type mentionné ci-dessus, cette fixation du couvercle sur la cuve se fait au moyen de quatre vis qui sont réparties à la périphérie du couvercle, et qui traversent un rebord extérieur du couvercle et un rebord extérieur de la cuve.

Toutefois, ce mode de fixation du couvercle présente les inconvénients suivants :
- l'ouverture du couvercle et sa remise en place sont longues,
- les vis de fixation étant radialement relativement éloignées du joint annulaire d'étanchéité et étant seulement au nombre de quatre, il est nécessaire de les serrer très fortement pour obtenir une étanchéité convenable entre le couvercle et la cuve au niveau du joint annulaire d'étanchéité, d'où une fatigue mécanique des pièces,
- le serrage des vis doit également être très fort pour éviter un desserrage sous l'effet des vibrations du moteur,
- la cuve et le couvercle étant généralement réalisés en matière plastique, il est nécessaire de prévoir des inserts métalliques noyés dans la matière plastique pour recevoir les vis, d'où un surcoût important au niveau de la fabrication du boîtier.

La présente invention a notamment pour but d'éviter ces inconvénients.

A cet effet, selon l'invention, un boîtier du genre en question est essentiellement caractérisé en ce qu'il comporte en outre une bague de serrage rotative, qui coopère avec la cuve et le couvercle pour solliciter le couvercle vers la cuve par effet de vissage lorsque la bague de serrage est dans une position angulaire dite de serrage, ladite bague pouvant être placée dans une position angulaire dite de libération, dans laquelle le couvercle peut être enlevé de l'ouverture de la cuve, ce boîtier comportant aussi un organe de rétention pouvant coopérer avec une denture qui s'étend angulairement, cet organe de rétention et cette denture étant solidaires l'un de la bague, l'autre de la cuve ou du couvercle, l'organe de rétention étant sollicité élastiquement vers la denture et étant adapté à s'engager dans ladite denture au moins lorsque la bague de serrage est dans sa position angulaire de serrage, pour retenir ladite bague tant qu'elle n'est pas soumise à un couple exercé volontairement sur elle.

Grâce à ces dispositions, l'ouverture et la remise en place du couvercle sont des opérations extrêmement rapides.

De plus, la bague de serrage peut agir sur le couvercle et la cuve en des positions radialement plus proches du joint annulaire d'étanchéité et angulairement mieux réparties que dans un système de fixation à vis, de sorte qu'on peut obtenir une bonne étanchéité en exerçant des efforts moindres sur les pièces, d'où une fatigue moindre de ces pièces.

En outre, lorsque le couvercle et la cuve sont réalisés en matière plastique, il n'est plus nécessaire de prévoir des inserts métalliques.

De plus, le fait que la bague de serrage soit retenue dans sa position de serrage par l'engagement de l'organe de rétention dans la denture garantit le maintien du serrage malgré les vibrations du moteur, et cela même si le serrage n'est pas extrêmement fort.

Enfin, du fait que la denture s'étend angulairement, l'organe de rétention peut s'engager dans ladite denture malgré l'imprécision de sa position par rapport à cette denture en fin de serrage de la bague, puisque, la bague de serrage étant serrée au moyen d'un couple prédéterminé, sa position de serrage peut varier légèrement d'un boîtier à un autre, notamment en fonction des différences de frottement entre les pièces et en fonction des différences d'usure des pièces.

Dans des modes de réalisation préférés, on a recours en outre à l'une et/ou à l'autre des dispositions suivantes :
- la cuve et le couvercle comportent à leur périphérie, l'un des premiers organes d'appui, l'autre des premières rampes de serrage et la bague de serrage comporte intérieurement des deuxièmes moyens d'appui et des deuxièmes rampes de serrage qui collaborent respectivement avec les premiers moyens d'appui et les premières rampes de serrage pour solliciter le couvercle vers la cuve lorsque la bague de serrage est déplacée en rotation de sa position de libération vers sa position de serrage ;
- la cuve comporte un rebord extérieur qui constitue les premiers moyens d'appui, les premières rampes de serrage faisant partie du couvercle, la bague de serrage comportant un rebord intérieur qui constitue les deuxièmes moyens d'appui, ce rebord intérieur étant destiné à s'appuyer axialement contre le rebord extérieur de la cuve, à l'opposé du couvercle, et les deuxièmes rampes de serrage étant adaptées à prendre appui contre les premières rampes de serrage en sollicitant ainsi le couvercle vers la cuve ;
- le rebord extérieur de la cuve est discontinu et forme des échancrures, le rebord intérieur de la bague de serrage étant lui-même discontinu et formant des parties saillantes qui sont dirigées radialement vers l'intérieur et qui sont adaptées à traverser lesdites échancrures lors du montage de la bague de serrage sur la cuve, les deuxièmes rampes de serrage formant également des parties saillantes qui sont dirigées radialement vers l'intérieur et qui sont décalées angulairement par rapport aux parties saillantes du rebord intérieur de la bague de serrage, les premières rampes de serrage formant elles aussi des parties saillantes qui sont dirigées radialement vers l'extérieur et qui sont adaptées à pénétrer axialement entre les deuxièmes rampes de serrage lors du montage du couvercle sur la cuve après montage de la bague de serrage, la cuve et le couvercle comportant des moyens de positionnement pour imposer au couvercle une position angulaire déterminée par rapport à la cuve, le couvercle comportant des échancrures extérieures délimitées angulairement par les premières rampes de serrage, lesquelles échancrures sont disposées en correspondance avec les échancrures du rebord extérieur de la cuve lorsque ledit couvercle est monté sur ladite cuve, le montage ou le démontage du couvercle n'étant possible que lorsque les deuxièmes rampes sont disposées angulairement en correspondance avec les échancrures du couvercle et avec les échancrures du rebord extérieur de la cuve, de sorte que la bague de serrage ne peut alors pas être démontée, ce qui évite en particulier de perdre la bague de serrage lorsqu'on enlève le couvercle ;
- la cuve comporte une gorge annulaire qui est délimitée vers l'ouverture de ladite cuve par le rebord extérieur de la cuve, le rebord intérieur de la bague de serrage coulissant angulairement dans cette gorge lorsque la bague de serrage est montée sur la cuve, ce qui garantit que la bague de serrage ne glisse pas axialement le long de la paroi latérale de la cuve lorsque le couvercle est enlevé, de sorte que le serrage ultérieur de la bague sur le couvercle n'est pas gêné ;
- chacune des deux portées annulaires appartenant respectivement au couvercle et à la cuve présente un jonc annulaire, les deux joncs annulaires étant adaptés à presser axialement le joint annulaire d'étanchéité, ce qui améliore l'étanchéité du contact entre les deux portées annulaires et le joint annulaire d'étanchéité ;
- l'organe de rétention est une patte élastique qui présente un ergot et qui sollicite élastiquement cet ergot vers la denture pour l'engager dans ladite denture ;
- la denture est disposée selon au moins un secteur angulaire qui est positionné pour que la patte élastique soit disposée en face dudit secteur angulaire lorsque la bague de serrage est serrée sous l'effet d'un couple de serrage prédéterminé ;
- la cuve et le couvercle sont réalisés en matière plastique.

D'autres caractéristiques et avantages de l'invention apparaîtront au cours de la description détaillée suivante d'une de ses formes de réalisation, donnée à titre d'exemple non limitatif, en regard des dessins joints.

Sur les dessins :
- la figure 1 est une vue schématique en coupe axiale d'un boîtier de filtre à gazole selon une forme de réalisation de l'invention,
- la figure 2 est une vue de détail de la figure 1,
- la figure 3 est une vue de dessus de la cuve du boîtier de la figure 1,
- la figure 4 est une vue de dessus du couvercle du boîtier de la figure 1,
- la figure 5 est une vue en élévation du boîtier de la figure 1, la bague de serrage étant enlevée pour plus de clarté,
- la figure 6 est une vue de dessus de la bague de serrage du boîtier de la figure 1, et
- la figure 7 est une vue schématique en coupe développée, prise selon la ligne VII-VII de la figure 3.

Sur les différentes figures, les mêmes références désignent des éléments identiques.

Pour simplifier la description, le boîtier de filtre à gazole sera décrit ci-dessous dans la position qui est représentée sur les dessins, c'est-à-dire en position verticale, le couvercle étant dirigé vers le haut, mais il pourrait éventuellement être utilisé dans une autre position.

Par conséquence, les termes tels que "haut", "bas", "supérieur", "inférieur", "vertical", "horizontal" ne sont donnés qu'à titre illustratif, et ne limitent donc en aucune façon l'invention.

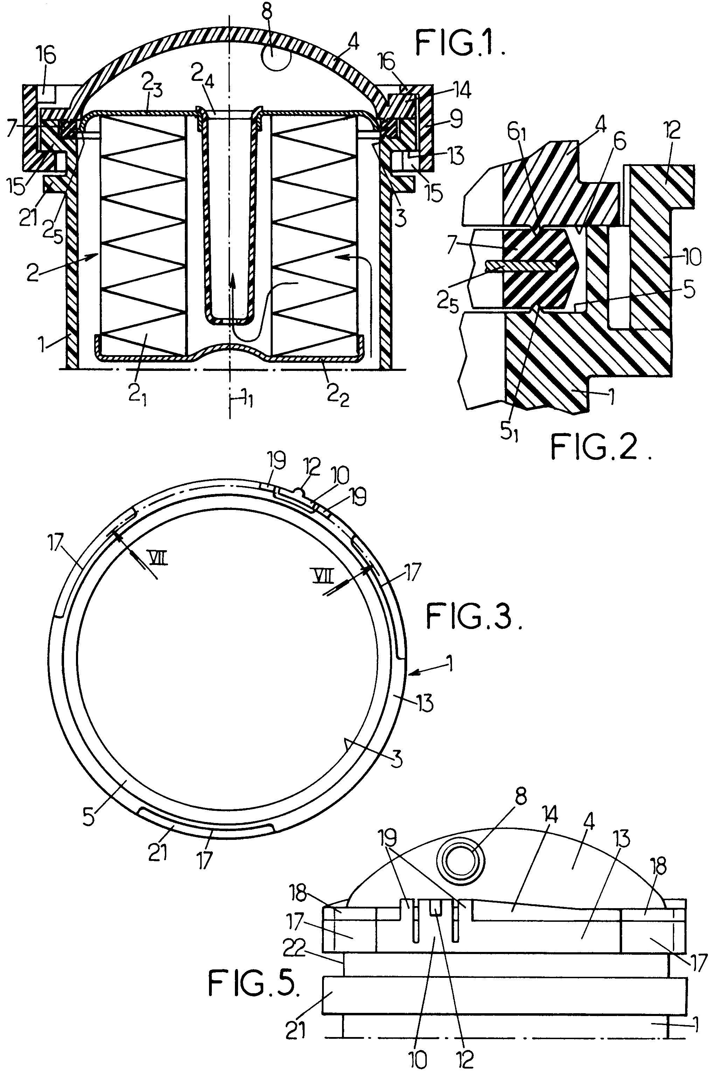

Comme représenté sur la figure 1, le boîtier de filtre à liquide selon l'invention, qui est ici un boîtier de filtre à gazole, comporte une cuve 1 adaptée à recevoir un élément filtrant 2, cette cuve présentant une ouverture 3 qui permet le remplacement de l'élément filtrant 2, cette ouverture étant fermée par un couvercle 4 qui est maintenu en place par une bague de serrage 9.

Dans la forme de réalisation qui est représentée sur les dessins, la cuve 1, le couvercle 4 et la bague 9 sont réalisés en matière plastique, par exemple en polyamide 6-6. D'autres matériaux pourraient toutefois envisagés sans pour autant sortir du cadre de l'invention.

La cuve 1 a une forme générale cylindrique de révolution autour d'un axe 1₁, et elle est en général destinée à être montée dans une position fixe, par exemple directement sur un moteur diesel.

L'élément filtrant 2 est simplement emboîté de façon amovible à l'intérieur de la cuve 1.

Cet élément filtrant 2 comporte une paroi latérale annulaire 2₁ constituée d'un matériau filtrant, par exemple du papier, un fond 2₂ en forme de disque qui sépare l'intérieur de la paroi annulaire 2₁ par rapport à la cuve 1, et une paroi supérieure 2₃ également en forme de disque qui présente un orifice central 2₄ et un rebord périphérique 2₅ qui est garni d'un joint annulaire 7 en élastomère.

Le joint 7 est pincé axialement entre deux portées annulaires radiales 5 et 6 (figure 2) appartenant respectivement à la cuve et au couvercle, de façon à réaliser une obturation étanche de l'ouverture 3 de la cuve par le couvercle.

Avantageusement, les portées annulaire radiale 5 et 6 comporte chacune un jonc annulaire, respectivement 5₁, 6₁, le joint annulaire 7 étant serré axialement entre les joncs 5₁ et 6₁. On augmente ainsi l'étanchéité obtenue au moyen du joint 7, pour une pression de serrage donnée du couvercle 4 sur la cuve 1.

Comme représenté sur la figure 1, le liquide à filtrer arrive dans la cuve 1 par un orifice d'entrée (non représenté), puis traverse radialement la paroi annulaire 2₁ de l'élément filtrant, et enfin s'écoule par l'orifice 2₄ vers un conduit de sortie 8 qui est formé dans le couvercle 4, ce conduit de sortie étant relié par un tuyau flexible (non représenté) au circuit d'alimentation du moteur.

Ainsi, le joint d'étanchéité 7 permet non seulement une fermeture étanche du boîtier, mais aussi un contact étanche entre la cuve et la périphérie 2₅ de la paroi supérieure 2₃ de l'élément filtrant, pour garantir que tout le gazole qui passe dans le boîtier traverse bien la paroi filtrante 2₁ de l'élément filtrant.

Le couvercle 4 est serré axialement sur le joint 7 au moyen de la bague de serrage 9, par un effet de vissage.

Pour cela, la bague de serrage 9 comporte, à son extrémité axiale inférieure, un rebord intérieur 15 discontinu (figures 1, 6 et 7) qui coopère avec un rebord extérieur 13 également discontinu de la cuve 1 (figures 1, 3, 5 et 7), et la bague de serrage 9 comporte en outre, à son extrémité axiale supérieure, des rampes de serrage 16 (figures 1, 6 et 7) qui recouvrent des rampes de serrage 14 complémentaires (figures 1, 4, 5 et 7) disposées à la périphérie du couvercle 4, en coopérant avec ces rampes de serrage pour appuyer sur le couvercle 4.

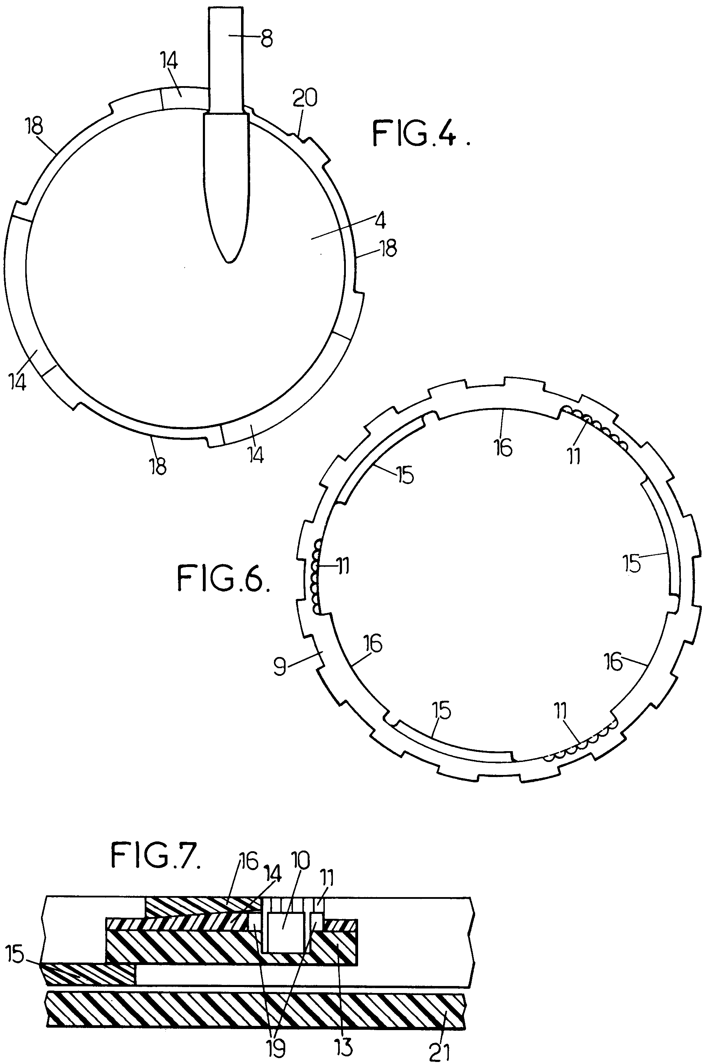

Comme représenté sur la figure 3, le rebord extérieur 13 de la cuve comporte trois échancrures 17 qui sont réparties angulairement de façon régulière à sa périphérie.

De plus, le rebord extérieur 13 de la cuve comporte à sa périphérie une patte élastique 10, qui s'étend axialement vers le haut à partir dudit rebord, et qui présente à son extrémité libre un ergot 12 saillant radialement vers l'extérieur, cet ergot 12 étant déplaçable radialement par déformation élastique de la patte 10.

En outre, la patte élastique 10 est encadrée par deux languettes 19 qui s'étendent axialement vers le haut jusqu'au même niveau que l'extrémité libre de ladite patte 10.

Enfin, comme on peut voir en particulier sur la figure 5, la cuve 1 comporte, sous le rebord extérieur 13, un collet 21, qui délimite avec le rebord extérieur 13 une gorge annulaire 22.

Comme on peut le voir en particulier sur la figure 6, le rebord intérieur 15 de la bague de serrage 9 comporte trois parties saillantes qui s'étendent radialement vers l'intérieur, et qui sont adaptées à pénétrer chacune axialement dans une des échancrures 17 du rebord extérieur 13 de la cuve, pour permettre le montage de la bague de serrage sur la cuve.

En outre, les rampes de serrage 16 de la bague 9 sont elles-mêmes au nombre de trois, réparties angulairement de façon régulière, mais de façon décalée par rapport aux parties saillantes du rebord intérieur 15.

De plus, la bague de serrage 9 comporte intérieurement trois zones dentées 11, formées chacune par une pluralité de cannelures axiales.

Comme représenté sur les figures 4 et 5, le couvercle 4 comporte également trois rampes de serrage 14 formant des parties saillantes radialement vers l'extérieur, en délimitant ainsi trois échancrures 18 entre elles. Ces échancrures 18 sont identiques aux échancrures 17 du rebord de la cuve.

En outre, le couvercle 4 comporte à sa périphérie une échancrure 20 spécialement conformée pour recevoir la patte élastique 10 et les deux languettes 19 qui l'encadrent, en définissant ainsi une position angulaire prédéterminée du couvercle 4 par rapport à la cuve 1.

Dans cette position prédéterminée, les échancrures 18 du couvercle sont disposées en correspondance avec les échancrures 17 de la cuve, comme on peut le voir en particulier sur la figure 5.

Pour monter la bague de serrage 9 sur la cuve, on oriente cette bague pour que les parties saillantes de son rebord intérieur 15 soient disposées en correspondance avec les échancrures 17 du rebord extérieur de la cuve, puis on engage axialement la bague de serrage sur la cuve en faisant passer les parties saillantes du rebord 15 dans les échancrures 17.

Lesdites parties saillantes du rebord 15 sont alors en appui sur le collet 21 et en position pour coulisser angulairement dans la gorge annulaire 22, les rampes de serrage 16 étant à bonne hauteur pour passer sur les rampes de serrage 14 du couvercle.

Après que la bague de serrage 9 a été montée sur la cuve 1, pour mettre en place le couvercle 4 sur la cuve, il est nécessaire de disposer les rampes de serrage 16 de la bague de serrage en correspondance avec les échancrures 17 de la cuve 1, par rotation de la bague de serrage 9, puis on oriente le couvercle 4 pour que ces échancrures 18 soient en correspondance avec les rampes de serrage 16, et enfin on met en place le couvercle 4 par emboîtement axial, les rampes de serrage 16 passant au travers des échancrures 18 du couvercle lors de la descente du couvercle vers la cuve.

Pour serrer le couvercle sur la cuve, on fait ensuite tourner la bague de serrage 9 (en général en tenant la bague de serrage dans une main), par exemple dans le sens d'un vissage, de sorte que les rampes de serrage 16 de la bague 9 appuient sur les rampes de serrage 14 du couvercle (figure 7) en même temps que le rebord intérieur 15 discontinu de la bague 9 pénètre sous le rebord extérieur 13 discontinu de la cuve, ce qui permet le serrage.

Lorsque le serrage est terminé, c'est après application d'un couple de serrage prédéterminé sur la bague 9, la patte élastique 10 se retrouve en face d'une des zones dentées 11, de sorte que l'ergot 12 s'engage dans l'une des cannelures de cette zone dentée, en garantissant que la bague de serrage 9 reste bien dans sa position serrée malgré les vibrations imprimées au boîtier par le moteur. Les zones dentées 11 s'étendent angulairement suffisamment pour que l'ergot 12 atteigne une des zones dentées 11 en fin de serrage, malgré la relative imprécision de la position finale de la bague après serrage.

Pour démonter le couvercle 4, il suffit d'appliquer à la bague de serrage 9 un couple de desserrage ayant une valeur suffisante pour vaincre les frottements et l'action de rétention de la patte élastique 10 et de son ergot 12, puis on dispose les rampes de serrage 16, bien visibles sur le dessus de la bague 9, en face des échancrures 18 du couvercle, ce qui permet d'enlever le couvercle. Dans cette position, les parties saillantes du rebord intérieur 15 de la bague sont engagés sous les parties saillantes du rebord extérieur 13 de la cuve, de sorte que la bague ne risque pas de se dégager de la cuve 1, sauf à lui faire effectuer une rotation pour disposer les parties saillantes de son rebord intérieur 15 en face des échancrures 17 du rebord extérieur de la cuve.

## Revendications

1. Boîtier de filtre à liquide pour moteur à combustion interne, comportant une cuve (1) qui est adaptée à recevoir un élément filtrant (2) et qui présente une ouverture (3) permettant de remplacer ledit élément filtrant, le boîtier comportant en outre un couvercle (4) amovible adapté à fermer ladite ouverture, le couvercle et la cuve présentant respectivement deux portées annulaires (5,6) qui sont disposées en regard l'une de l'autre lorsque le couvercle ferme l'ouverture de la cuve et qui sont adaptées à pincer axialement entre elles un joint annulaire (7) pour réaliser une fermeture étanche de l'ouverture de la cuve, le couvercle (4) comportant un conduit (8) qui le traverse, la cuve étant destinée à être montée dans une position fixe,
ce boîtier étant caractérisé en ce qu'il comporte en outre une bague de serrage (9) rotative, qui coopère avec la cuve (1) et le couvercle (4) pour solliciter le couvercle vers la cuve par effet de vissage lorsque la bague de serrage est dans une position angulaire dite de serrage, ladite bague pouvant être placée dans une position angulaire dite de libération, dans laquelle le couvercle peut être enlevé de l'ouverture de la cuve,
et en ce qu'il comporte également un organe de rétention (10) pouvant coopérer avec une denture (11) qui s'étend angulairement, cet organe de rétention et cette denture étant solidaires l'un de la bague, l'autre de la cuve ou du couvercle, l'organe de rétention (10) étant sollicité élastiquement vers la denture (11) et étant adapté à s'engager dans ladite denture au moins lorsque la bague de serrage est dans sa position angulaire de serrage, pour retenir ladite bague tant qu'elle n'est pas soumise à un couple de rotation exercé volontairement sur elle.

2. Boîtier selon la revendication 1, dans lequel la cuve (1) et le couvercle (4) comportent à leur périphérie, l'un des premiers organes d'appui (13), l'autre des premières rampes de serrage (14), et dans lequel la bague de serrage (9) comporte intérieurement des deuxièmes moyens d'appui (15) et des deuxièmes rampes de serrage (16) qui collaborent respectivement avec les premiers moyens d'appui (13) et les premières rampes de serrage (14) pour solliciter le couvercle vers la cuve lorsque la bague de serrage (9) est déplacée en rotation de sa position de libération vers sa position de serrage.

3. Boîtier selon la revendication 2, dans lequel la cuve comporte un rebord extérieur (13) qui constitue les premiers moyens d'appui, les premières rampes de serrage (14) faisant partie du couvercle (4), la bague de serrage comportant un rebord intérieur (15) qui constitue les deuxièmes moyens d'appui, ce rebord intérieur étant destiné à s'appuyer axialement contre le rebord extérieur (13) de la cuve, à l'opposé du couvercle, et les deuxièmes rampes de serrage étant adaptées à prendre appui contre les premières rampes de serrage en sollicitant ainsi le couvercle vers la cuve.

4. Boîtier selon la revendication 3, dans lequel le rebord extérieur (13) de la cuve est discontinu et forme des échancrures (17), le rebord intérieur (15) de la bague de serrage étant lui-même discontinu et formant des parties saillantes qui sont dirigées radialement vers l'intérieur et qui sont adaptées à traverser lesdites échancrures (17) lors du montage de la bague de serrage sur la cuve, les deuxièmes rampes de serrage (16) formant également des parties saillantes qui sont dirigées radialement vers l'intérieur et qui sont décalées angulairement par rapport aux parties saillantes du rebord intérieur (15) de la bague de serrage, les premières rampes de serrage (14) formant elles aussi des parties saillantes qui sont dirigées radialement vers l'extérieur et qui sont adaptées à pénétrer axialement entre les deuxièmes rampes de serrage (15) lors du montage du couvercle (4) sur la cuve après montage de la bague de serrage (9), la cuve et le couvercle comportant des moyens de positionnement (19,20) pour imposer au couvercle (4) une position angulaire déterminée par rapport à la cuve, le couvercle (4) comportant des échancrures (18) extérieures délimitées angulairement par les premières rampes de serrage (14), lesquelles échancrures (18) sont disposées en correspondance avec les échancrures (17) du rebord extérieur de la cuve, le montage ou le démontage du couvercle (4) n'étant possible que lorsque les deuxièmes rampes (16) sont disposées angulairement en correspondance avec les échancrures (18) du couvercle et avec les échancrures (17) du rebord extérieur (13) de la cuve, de sorte que la bague de serrage (9) ne peut alors pas être démontée.

5. Boîtier selon l'une quelconque des revendications 3 et 4, dans lequel la cuve (1) comporte une gorge annulaire (22) qui est délimitée vers l'ouverture (3) de ladite cuve par le rebord extérieur (13) de la cuve, le rebord intérieur (15) de la bague de serrage coulissant angulairement dans cette gorge lorsque la bague de serrage est montée sur la cuve.

6. Boîtier selon l'une quelconque des revendications précédentes, dans lequel chacune des deux portées annulaires (5,6) appartenant respectivement au couvercle et à la cuve présente un jonc annulaire (5₁, 6₁), les deux joncs annulaires étant adaptés à presser axialement le joint annulaire d'étanchéité (7).

7. Boîtier selon l'une quelconque des revendications précédentes, dans lequel l'organe de rétention (10) est une patte élastique qui présente un ergot (12) et qui sollicite élastiquement cet ergot vers la denture (11) pour l'engager dans ladite denture.

8. Boîtier selon la revendication 7, dans lequel la denture (11) est disposée selon au moins un secteur angulaire qui est positionné pour que la patte élastique (10) soit disposée en face dudit secteur angulaire lorsque la bague de serrage est serrée sous l'effet d'un couple de serrage prédéterminé.

9. Boîtier selon l'une quelconque des revendications précédentes, dans lequel la cuve et le couvercle sont réalisés en matière plastique.
